# EUROPÄISCHE PATENTANMELDUNG

(11) **EP 2 800 255 A1**
(43) Veröffentlichungstag der Anmeldung: **05.11.2014**
(21) Anmeldenummer: 13165694.4
(22) Anmeldetag: 29.04.2013
(51) Int. Cl.: H02K 15/00

(54) **Herstellung eines Rotors einer elektrischen Asynchronmaschine**

(71) Anmelder: Siemens Aktiengesellschaft, 80333 München (DE); Bodycote Heiß-Isostatisches Pressen GmbH, 83527 Haag-Winden (DE)
(72) Erfinder: Die Erfindernennung liegt noch nicht vor

(57) **Zusammenfassung**

Die Erfindung betrifft ein Verfahren zur Herstellung eines Rotors einer elektrischen Asynchronmaschine. Bei dem Verfahren wird eine Trägerwelle (1) mit Wellennuten (4) hergestellt. Auf die Trägerwelle (1) wird ein Kurzschlussläufer aufgebracht, wobei die Trägerwelle (1) und ein elektrisch leitfähiges Schüttgut (8) in einen Behälter (2) eingebracht werden, so dass das Schüttgut (8) die Wellennuten (4) ausfüllt. Das Schüttgut (8) wird in dem Behälter (2) durch Heiß Isostatisches Pressen verdichtet und mit der Trägerwelle (1) verbunden.

## Beschreibung

Die Erfindung betrifft ein Verfahren zur Herstellung eines Rotors einer elektrischen Asynchronmaschine.

Rotoren sind Bestandteile elektrischer Asynchronmaschinen. Teilweise haben diese Maschinen Drehzahlen über 4000 Umdrehungen pro Minute und Leistungen von mehr als 1 Megawatt. Rotoren derartiger Maschinen müssen hohen mechanischen und thermischen Anforderungen genügen, beispielsweise aufgrund der Fliehkraftbelastung und starker Erwärmung.

WO 2005/124973 A1 offenbart ein Verfahren zur Herstellung eines Rotors für einen elektrischen Motor, bei dem ein im Wesentlichen zylindrischer Kern mit longitudinalen Nuten versehen wird, in die ein Diffusionsmaterial und elektrisch leitfähige Stäbe eingebracht und durch Hitze und Druck mit dem Kern verbunden werden.

Derartige Verfahren verwenden als elektrisch leitfähige Stäbe beispielsweise zuvor einzeln hergestellte Kupferstäbe, die anschließend noch vernickelt werden und in die Nuten eingelegt, vakuumdicht gekapselt und durch Diffusionsschweißen mit dem Kern des Rotors verbunden werden. Da die Stäbe in die beispielsweise gefrästen oder gedrehten Wellennuten einlegbar sein müssen, unterliegen sie hohen Passgenauigkeitsanforderungen und die Produktion der Rotoren erfordert daher viele Prüfschritte.

Der Erfindung liegt die Aufgabe zugrunde, ein verbessertes Verfahren zur Herstellung von Rotoren elektrischer Asynchronmaschinen anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zur Herstellung eines Rotors einer elektrischen Asynchronmaschine wird zunächst eine Trägerwelle mit Wellennuten hergestellt. Auf die Trägerwelle wird dann ein Kurzschlussläufer aufgebracht. Zum Aufbringen des Kurzschlussläufers werden die Trägerwelle und ein elektrisch leitfähiges Schüttgut in einen Behälter eingebracht, so dass das Schüttgut die Wellennuten ausfüllt. Das Schüttgut wird in dem Behälter durch Heiß Isostatisches Pressen (HIP) verdichtet und mit der Trägerwelle verbunden. Der Behälter wird nach dem Heiß Isostatischen Pressen von der Trägerwelle getrennt.

Erfindungsgemäß wird der Kurzschlussläufer des Rotors also aus einem in die Wellennuten der Trägerwelle eingebrachten Schüttgut hergestellt, das durch Heiß Isostatisches Pressen verdichtet und mit der Trägerwelle verbunden wird. Dadurch entfällt vorteilhaft die aus dem Stand der Technik bekannte Anfertigung einzelner in die Wellennuten passender Formteile sowie das einzelne Einbringen der Formteile in die Wellennuten. Das erfindungsgemäße Verfahren vereinfacht somit die Herstellung von Kurzschlussläufern wesentlich gegenüber dem aus dem Stand bekannten Verfahren, bei dem in die Wellennuten einzelne Formteile eingebracht werden. Außerdem reduziert das erfindungsgemäße Verfahren auch die Herstellungskosten, da die kostenintensive Einzelherstellung passgenauer Formteile entfällt.

Ein weiterer Vorteil des erfindungsgemäßen Verfahrens besteht darin, dass es eine einfache Herstellung auch komplizierter geometrischer Formen von Kurzschlussläufern ermöglicht, indem lediglich die Wellennuten entsprechend gestaltet werden. Dadurch ermöglicht das Verfahren die einfache Herstellung von Kurzschlussläufern mit optimierten mechanischen und elektrischen Eigenschaften, insbesondere hinsichtlich der mechanischen Festigkeit und dem elektrischen Wirkungsgrad der Kurzschlussläufer.

Eine Ausgestaltung der Erfindung sieht vor, dass als Schüttgut ein vernickeltes Kupfer-Schüttgut verwendet wird.

Eine weitere Ausgestaltung der Erfindung sieht vor, dass die Trägerwelle aus einem Stahl gefertigt wird.

Kupfer eignet sich vor allem wegen seiner guten elektrischen Leitfähigkeit vorteilhaft als Material für Kurzschlussläufer.

Die Vernickelung des Kupfer-Schüttguts ist vorteilhaft, da sich Nickel metallurgisch als besonders geeigneter Diffusionsstoff für eine feste Verbindung von Kupfer mit einer Trägerwelle erwiesen hat, insbesondere wenn die Trägerwelle aus Stahl gefertigt ist. Die Vernickelung des Kupfer-Schüttguts hat außerdem den Vorteil, dass eine separate Vernicklung von Abschnitten des Kurzschlussläufers wie etwa die Einzelvernickelung der Kupferstäbe in dem oben genannten bekannten Verfahren entfällt.

Stahl eignet sich vor allem wegen seiner Festigkeit vorteilhaft als Material für Trägerwellen.

Eine weitere Ausgestaltung der Erfindung sieht vor, dass der Behälter im Wesentlichen als ein geschlossenes Blechrohr ausgebildet ist.

Diese Ausgestaltung ermöglicht vorteilhaft eine einfache und kostengünstige Herstellung für Heiß Isostatisches Pressen geeigneter Behälter. Das Blechrohr dient dabei einerseits der Formgebung des Kurzschlussläufers durch die Definition des vom Schüttgut auszufüllenden Raumes, und andererseits verhindert das Blechrohr das Eindringen von bei dem Heiß Isostatischen Pressen verwendeten Prozessgas in das Schüttgut und eine durch ein derartiges Eindringen von Prozessgas verursachte Porosität des hergestellten Kurzschlussläufers.

Eine weitere Ausgestaltung der Erfindung sieht vor, dass der Behälter eine zu der Trägerwelle korrespondierende Form und Größe hat, so dass eine von Wellennuten unterbrochene Außenseite der Trägerwelle nach deren Einbringen in den Behälter an einer Innenseite des Behälters anliegt.

Diese Ausgestaltung ermöglicht es, den von Schüttgut ausgefüllten Raum geeignet zu begrenzen und einen Rotor mit einer glatten Oberfläche herzustellen.

Eine weitere Ausgestaltung der Erfindung sieht vor, dass die Trägerwelle und der Behälter im Wesentlichen zylindrisch geformt sind.

Dadurch wird ein Rotor mit einer zylindrischen Form hergestellt, die im Allgemeinen für die Rotation des Rotors besonders vorteilhaft ist.

Bei dieser Ausgestaltung der Erfindung wird der Behälter vorzugsweise mittels einer Abdrehbewegung von der Trägerwelle getrennt.

Dadurch wird der Behälter in besonders einfacher und kostengünstiger Weise von der Trägerwelle entfernt.

Eine weitere Ausgestaltung der Erfindung sieht vor, dass die Trägerwelle und der Behälter derart gestaltet werden, dass der von dem Schüttgut in dem Behälter ausgefüllte Raum eine zusammenhängende Struktur hat.

Auf diese Weise wird durch das Heiß Isostatische Pressen in einem einzigen Herstellungsschritt direkt ein zusammenhängender Kurzschlussläufer erzeugt, so dass ein zusätzliches elektrisch leitfähiges Verbinden einzelner Abschnitte des Kurzschlussläufers vorteilhaft entfällt.

Eine weitere Ausgestaltung der Erfindung sieht vor, dass der Behälter bei dem Heiß Isostatischen Pressen in einem mit einem Prozessgas befüllten Autoklaven erhitzt wird. Als Prozessgas wird dabei vorzugsweise Argon verwendet.

Diese Ausgestaltungen der Erfindung machen sich bekannte und bewährte Ausführungen Heiß Isostatischen Pressens zu Nutze.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: schematisch eine Trägerwelle eines Rotors einer elektrischen Asynchronmaschine in einem Behälter, und
- FIG 2: schematisch eine Trägerwelle eines Rotors einer elektrischen Asynchronmaschine und elektrisch leitfähiges Schüttgut in einem Behälter.

Einander entsprechende Teile sind in den Figuren mit den gleichen Bezugszeichen versehen.

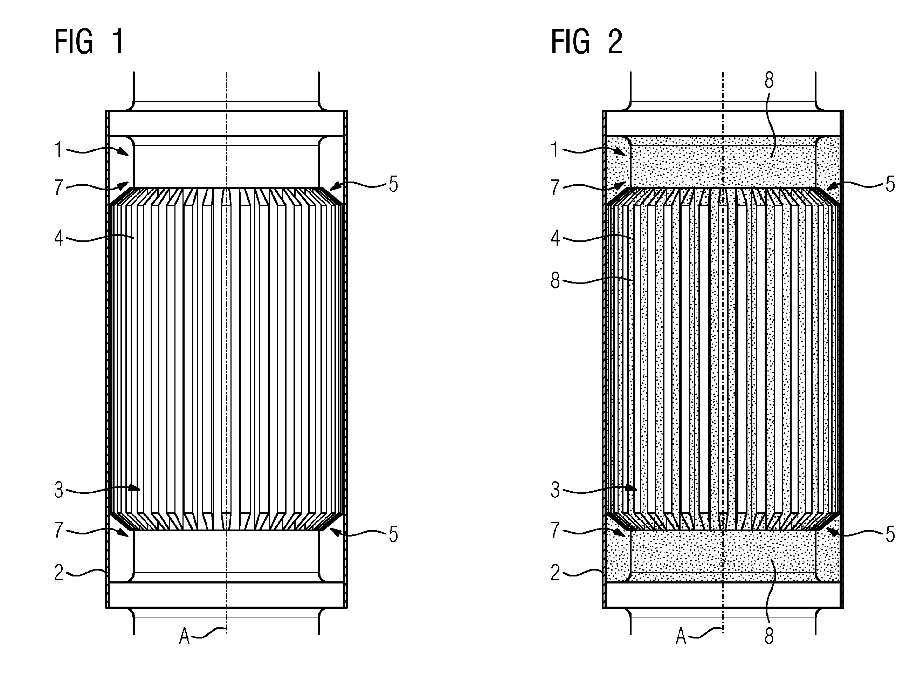

Figur 1 zeigt schematisch eine Trägerwelle 1 eines Rotors einer elektrischen Asynchronmaschine in einem Behälter 2.

Die Trägerwelle 1 ist im Wesentlichen kreiszylindrisch gestaltet, wobei ein Zylindermantel 3 der Trägerwelle 1 eine Vielzahl parallel zu einer Zylinderachse A verlaufender Wellennuten 4 aufweist. Die Endabschnitte 5 des Zylindermantels 3 sind konisch in Form von Kegelstümpfen gestaltet, die sich zu den Enden des Zylindermantels 3 hin verengen.

Der Behälter 2 ist ebenfalls kreiszylindrisch gestaltet, wobei sein Innendurchmesser dem Außendurchmesser des Zylindermantels 3 der Trägerwelle 1 entspricht. Der Zylindermantel 3 des Behälters 2 ist als ein Blechrohr ausgebildet.

Bei dem erfindungsgemäßen Verfahren zur Herstellung des Rotors wird die Trägerwelle 1 wie in Figur 1 gezeigt in den Behälter 2 eingebracht, so dass das Blechrohr an dem die Wellennuten 4 aufweisenden Zylindermantel 3 der Trägerwelle 1 anliegt. Der Behälter 2 ist in Figur 1 aufgeschnitten dargestellt, um die Lage der Trägerwelle 1 innerhalb des Behälters 2 klar zu machen. Die Längsausdehnung des Behälters 2 übertrifft die Längsausdehnung des Zylindermantels 3 der Trägerwelle 1, so dass nach dem Einbringen der Trägerwelle 1 in den Behälter 2 wie in Figur 1 gezeigt Endbereiche 7 des Innenraums des Behälters 2, die von den Endabschnitten 5 des Zylindermantels 3 der Trägerwelle 1 begrenzt werden, frei bleiben und die Wellennuten 4 in diese Endbereiche 7 münden.

Wie Figur 2 zeigt wird der von der Trägerwelle 1 nicht eingenommene Raum innerhalb des Behälters 2 mit einem elektrisch leitfähigen Schüttgut 8 gefüllt, so dass das Schüttgut 8 die Wellennuten 4 der Trägerwelle 1 sowie die Endbereiche 7 des Innenraums des Behälters 2 ausfüllt. Da die Wellennuten 4 in die Endbereiche 7 münden, hat der von dem Schüttgut 8 in dem Behälter 2 ausgefüllte Raum eine zusammenhängende Struktur.

Das Schüttgut 8 ist in diesem Ausführungsbeispiel ein vernickeltes Kupfer-Schüttgut.

Erfindungsgemäß wird das Schüttgut 8 in dem Behälter 2 durch Heiß Isostatisches Pressen verdichtet und mit der Trägerwelle 1 verbunden, wobei der Behälter 2 in einem mit Argon als Prozessgas befüllten Autoklaven unter hohem Druck erhitzt wird. Dadurch entsteht ein auf die Trägerwelle 1 aufgebrachter zusammenhängender Kurzschlussläufer, der von dem verdichteten Schüttgut 8 gebildet wird. Das Blechrohr des Behälters 2 wird nach dem Heiß Isostatischen Pressen von der Trägerwelle 1 abgedreht.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung eines Rotors einer elektrischen Asynchronmaschine, bei dem
- eine Trägerwelle (1) mit Wellennuten (4) hergestellt wird,
- und auf die Trägerwelle (1) ein Kurzschlussläufer aufgebracht wird, wobei
- die Trägerwelle (1) und ein elektrisch leitfähiges Schüttgut (8) in einen Behälter (2) eingebracht werden, so dass das Schüttgut (8) die Wellennuten (4) ausfüllt,
- das Schüttgut (8) in dem Behälter (2) durch Heiß Isostatisches Pressen verdichtet und mit der Trägerwelle (1) verbunden wird,
- und der Behälter (2) nach dem Heiß Isostatischen Pressen von der Trägerwelle (1) getrennt wird.

2. Verfahren nach Anspruch 1,
**dadurch gekennzeichnet, dass** als Schüttgut (8) ein vernickeltes Kupfer-Schüttgut verwendet wird.

3. Verfahren nach einem der vorhergehenden Ansprüche,
**dadurch gekennzeichnet, dass** die Trägerwelle (1) aus einem Stahl gefertigt wird.

4. Verfahren nach einem der vorhergehenden Ansprüche,
**dadurch gekennzeichnet, dass** der Behälter (2) im Wesentlichen als ein geschlossenes Blechrohr ausgebildet ist.

5. Verfahren nach einem der vorhergehenden Ansprüche,
**dadurch gekennzeichnet, dass** der Behälter (2) eine zu der Trägerwelle (1) korrespondierende Form und Größe hat, so dass eine von Wellennuten (4) unterbrochene Außenseite der Trägerwelle (1) nach deren Einbringen in den Behälter (2) an einer Innenseite des Behälters (2) anliegt.

6. Verfahren nach einem der vorhergehenden Ansprüche,
**dadurch gekennzeichnet, dass** die Trägerwelle (1) und der Behälter (2) im Wesentlichen zylindrisch geformt sind.

7. Verfahren nach Anspruch 6,
**dadurch gekennzeichnet, dass** der Behälter (2) mittels einer Abdrehbewegung von der Trägerwelle (1) getrennt wird.

8. Verfahren nach einem der vorhergehenden Ansprüche,
**dadurch gekennzeichnet, dass** die Trägerwelle (1) und der Behälter (2) derart gestaltet werden, dass der von dem Schüttgut (8) in dem Behälter (2) ausgefüllte Raum eine zusammenhängende Struktur hat.

9. Verfahren nach einem der vorhergehenden Ansprüche,
**dadurch gekennzeichnet, dass** der Behälter (2) beim Heiß Isostatischen Pressen in einem mit einem Prozessgas befüllten Autoklaven erhitzt wird.

10. Verfahren nach Anspruch 9,
**dadurch gekennzeichnet, dass** als Prozessgas Argon verwendet wird.
